# EUROPÄISCHE PATENTANMELDUNG

(11) **EP 4 187 333 A1**
(43) Veröffentlichungstag der Anmeldung: **31.05.2023**
(21) Anmeldenummer: 21210218.0
(22) Anmeldetag: 24.11.2021
(51) Int. Cl.: G05B 19/042, G05B 17/02

(54) **VERFAHREN UND ANORDNUNG ZUM ÜBERWACHEN ODER STEUERN EINER MASCHINE**

(71) Anmelder: Siemens Aktiengesellschaft, 80333 München (DE)
(72) Erfinder: Allmaras, Moritz, 81673 München (DE); Fischer, Jan, 81541 München (DE); Klein, Daniel, 92280 Kastl (DE); Klein, Wolfram, 85579 Neubiberg (DE); Listl, Franz Georg, 93186 Pettendorf (DE); Obst, Birgit, 80935 München (DE); Rosen, Roland, 82229 Seefeld (DE); Weinert, Nils, 80798 München (DE)
(74) Vertreter: Siemens Patent Attorneys

(57) **Zusammenfassung**

Zum Überwachen oder Steuern einer Maschine (M) werden fortlaufend aktuelle Betriebssignale (BS) der Maschine (M) erfasst und ein aktueller Betriebszustand (MS) der Maschine (M) gemessen. Anhand der erfassten Betriebssignale (BS) wird durch einen nebenläufigen Simulator (SIM) fortlaufend ein simulierter Betriebszustand (SIS) der Maschine (M) ermittelt. Weiterhin wird infolge einer Detektion einer Abweichung zwischen dem simulierten Betriebszustand (SIS) und dem gemessenen Betriebszustand (MS) ein die Abweichung oder eine Änderung des gemessenen Betriebszustands (MS) quantifizierendes Abweichungsmuster mit mehreren vorgegebenen, für eine Modifikation der Maschine (M) oder eines Maschinenbetriebs charakteristischen Abweichungstypen (DT1, DT2) verglichen, denen jeweils eine abweichungstypspezifische Simulatorvariante (SV1, SV2) zugeordnet ist. Abhängig vom Vergleichsergebnis wird dann einer der Abweichungstypen (DT1, DT2) selektiert. Anhand der dem selektierten Abweichungstyp (DT1) zugeordneten Simulatorvariante (SV1) wird der nebenläufige Simulator (SIM) adaptiert, und mittels des adaptierten nebenläufigen Simulators (SIM) wird die Maschine (M) überwacht oder gesteuert.

## Beschreibung

Komplexe Maschinen, wie z.B. Roboter, Motoren, Fertigungsanlagen, Werkzeugmaschinen, Turbinen, Verbrennungskraftmaschinen oder Kraftfahrzeuge benötigen für einen produktiven und stabilen Betrieb in der Regel komplexe Steuerungs- und Überwachungsverfahren. Zu diesem Zweck werden in zunehmendem Maße Simulationsverfahren eingesetzt, die ein physisches Verhalten der zu steuernden Maschine simulieren. Häufig wird dabei angestrebt, einen sogenannten digitalen Zwilling der Maschine oder zumindest für eine Komponente der Maschine bereitzustellen, der ein Verhalten der Maschine parallel zum laufenden Betrieb der Maschine simuliert. Dem digitalen Zwilling werden hierzu fortlaufend aktuelle Betriebssignale der Maschine zugeführt, anhand derer die nebenläufige Simulation mit dem tatsächlichen Maschinenbetrieb synchronisiert wird.

Anhand eines solchen digitalen Zwillings können Betriebsdaten der Maschine ermittelt werden, die anderweitig nicht oder nur schwer messbar wären. Darüber hinaus kann in vielen Fällen ein zukünftige Betriebsverhalten der Maschine simulativ vorhergesagt werden. Die simulativ ermittelten Betriebsdaten können dann ergänzend zu direkt messbaren Betriebsdaten dazu benutzt werden, die Maschine in optimierter und/oder vorausschauender Weise zu steuern oder zu überwachen. So können beispielsweise in einer Fertigungsanlage drohende Materialengpässe erkannt oder Ablaufsequenzen optimiert werden. Analog dazu kann eine nur schwer direkt messbare Innentemperatur einer Wicklung eines Elektromotors simulativ ermittelt werden, um bei Überschreiten eines Grenzwerts ein Warnsignal auszugeben oder den Elektromotor automatisch abzuregeln.

Es ist zu erwarten, dass die Maschine umso effizienter gesteuert oder überwacht werden kann, je genauer eine nebenläufige Simulation ein tatsächliches Verhalten der Maschine abbilden kann. Im realen Betrieb einer Maschine werden indessen häufig Veränderungen vorgenommen, die hohe Anforderungen an die Flexibilität eines in Echtzeit mitlaufenden Simulators stellen. Dies gilt insbesondere für Produktionsanlagen, bei denen häufig Maschinenkomponenten ausgetauscht oder Spezifikationen eines herzustellenden Produkts geändert werden. Ein entsprechend flexibler und mithin detaillierter Simulator bedingt jedoch in der Regel eine hohe Komplexität und/oder erhebliche Rechenressourcen, die in vielen Fällen kaum in Echtzeit erbracht werden können.

Es ist Aufgabe der vorliegenden Erfindung, ein Verfahren und eine Anordnung zum Überwachen oder Steuern einer Maschine anzugeben, die sich flexibler einsetzen lassen.

Gelöst wird diese Aufgabe durch ein Verfahren mit den Merkmalen des Patentanspruchs 1, durch eine Anordnung mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruchs 12.

Zum Überwachen oder Steuern einer Maschine werden im laufenden Betrieb der Maschine fortlaufend aktuelle Betriebssignale der Maschine erfasst und ein aktueller Betriebszustand der Maschine gemessen. Die Maschine kann dabei insbesondere als Roboter, als Motor, als Fertigungsanlage, als Werkzeugmaschine, als Turbine, als Verbrennungskraftmaschine und/oder als Kraftfahrzeug ausgestaltet sein. Anhand der erfassten Betriebssignale wird durch einen nebenläufigen Simulator fortlaufend ein simulierter Betriebszustand der Maschine ermittelt. Weiterhin wird infolge einer Detektion einer Abweichung zwischen dem simulierten Betriebszustand und dem gemessenen Betriebszustand ein die Abweichung oder eine Änderung des gemessenen Betriebszustands quantifizierendes Abweichungsmuster mit mehreren vorgegebenen, für eine Modifikation der Maschine oder eines Maschinenbetriebs charakteristischen Abweichungstypen verglichen, denen jeweils eine abweichungstypspezifische Simulatorvariante zugeordnet ist. Abhängig vom Vergleichsergebnis wird dann einer der Abweichungstypen selektiert. Anhand der dem selektierten Abweichungstyp zugeordneten Simulatorvariante wird der nebenläufige Simulator adaptiert, und mittels des adaptierten nebenläufigen Simulators wird die Maschine überwacht oder gesteuert.

Zum Ausführen des erfindungsgemäßen Verfahrens sind eine erfindungsgemäße Anordnung, ein Computerprogrammprodukt sowie ein computerlesbares, vorzugsweise nichtflüchtiges Speichermedium vorgesehen.

Das erfindungsgemäße Verfahren sowie die erfindungsgemäße Anordnung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud ausgeführt werden.

Ein Vorteil der Erfindung ist insbesondere darin zu sehen, dass eine Vielzahl Änderungen der Maschine oder des Maschinenbetriebs automatisch erkannt und die nebenläufige Simulation entsprechend adaptiert werden können. Es ist insbesondere nicht erforderlich, dass der nebenläufige Simulator vorab alle möglichen Änderungen der Maschine oder des Maschinenbetriebs abbildet. Bei vielen Änderungsphänomenen ist somit kein manueller Eingriff in den laufenden Betrieb der Maschine oder in die Simulation mehr erforderlich.

Vorteilhafte Ausführungsformen und Weiterbildungen der Erfindung sind in den abhängigen Ansprüchen angegeben.

Gemäß einer vorteilhaften Ausführungsform der Erfindung können den vorgegebenen Abweichungstypen jeweils ein oder mehrere Referenzmuster zugeordnet sein. Ein jeweils ermitteltes Abweichungsmuster kann mit den Referenzmustern verglichen werden, wobei jeweils ein Ähnlichkeitsmaß ermittelt wird. Die Selektion des Abweichungstyps kann dann abhängig von den ermittelten Ähnlichkeitsmaßen erfolgen. Insbesondere kann ein Schwellwert für das Ähnlichkeitsmaß vorgegeben werden, bei dessen Überschreitung bzw. Unterschreitung ein dem betreffenden Referenzmuster zugeordneter Abweichungstyp selektiert wird. Zur Ermittlung eines Ähnlichkeitsmaßes können bekannte Ähnlichkeitsmetriken, wie beispielsweise eine Jaccard-Ähnlichkeitsmetrik, eine Braun-Ähnlichkeitsmetrik und/oder eine Phi-Ähnlichkeitsmetrik verwendet werden.

Insbesondere können Referenzmuster vorgesehen sein, die für einen Austausch von Maschinenkomponenten, für strukturelle, topologische und/oder funktionelle Modifikationen der Maschine, für eine Produktänderung bei einer Fertigungsanlage, für eine Änderung eines Benutzerverhaltens oder eines Arbeitsplanes, für Wartungsarbeiten und/oder für eine Änderung einer Konfiguration der Maschine charakteristisch sind. Die vorstehenden Änderungen der Maschine oder des Maschinenbetriebs treten in der Praxis häufig auf und erfordern bisher in vielen Fällen eine manuelle Anpassung der nebenläufigen Simulation und/oder eine Unterbrechung des laufenden Maschinenbetriebs. Mittels des erfindungsgemäßen Verfahrens können derartige manuelle Eingriffe oft vermieden oder zumindest erheblich reduziert werden.

Nach einer weiteren vorteilhaften Ausführungsform der Erfindung kann zum Vergleich des ermittelten Abweichungsmusters mit einem jeweiligen Abweichungstyp mittels der dem jeweiligen Abweichungstyp zugeordneten Simulatorvariante ein weiterer simulierter Betriebszustand ermittelt werden. Der weitere simulierte Betriebszustand kann dann mit dem gemessenen Betriebszustand verglichen werden und die Selektion des Abweichungstyps kann abhängig vom Vergleichsergebnis erfolgen. Insbesondere kann derjenige Abweichungstyp selektiert werden, dessen zugeordnete Simulatorvariante den am besten mit dem gemessenen Betriebszustand übereinstimmenden weiteren simulierten Betriebszustand ermittelt. Vorzugsweise kann zur Ermittlung eines weiteren simulierten Betriebszustandes eine Instanz der zugeordneten Simulatorvariante instanziiert und ausgeführt werden.

Nach einer vorteilhaften Weiterbildung der Erfindung können die ermittelten Abweichungsmuster in einer Datenbank insbesondere als Referenzmuster für den selektierten Abweichungstyp hinterlegt werden. Die hinterlegten Abweichungsmuster können dann bei einer nachfolgenden Selektion des Abweichungstyps berücksichtigt werden. Auf diese Weise können die vorgegebenen Abweichungstypen im laufenden Betrieb mit real auftretenden Abweichungsmustern angereichert bzw. ihre Erkennung verfeinert werden.

Nach einer weiteren vorteilhaften Weiterbildung der Erfindung kann einem jeweils vorgegebenen Abweichungstyp eine Ursacheninformation über eine abweichungsverursachende Maschinenkomponente zugeordnet werden. Der der nebenläufige Simulator kann dann abhängig von der dem selektierten Abweichungstyp zugeordneten Ursacheninformation maschinenkomponentenspezifisch adaptiert werden. Insofern viele Simulationsmodelle komponentenspezifisch ausgerichtet sind, kann der nebenläufige Simulator anhand einer solchen Ursacheninformation in vielen Fällen genauer an veränderte Betriebsbedingungen angepasst werden.

Weiterhin kann einem jeweils vorgegebenen Abweichungstyp eine Variante der Maschine zugeordnet werden. Der nebenläufige Simulator kann dann abhängig von der dem selektierten Abweichungstyp zugeordneten Variante der Maschine maschinenvariantenspezifisch adaptiert werden. Als Maschinenvarianten können insbesondere ein Vorgänger und/oder ein Nachfolger der aktuellen Maschine vorgesehen sein. So kann bei einer Detektion eines für einen Nachfolger charakteristischen Abweichungsmusters der nebenläufige Simulator automatisch an den Nachfolger angepasst werden.

Nach einer vorteilhaften Ausführungsform der Erfindung können die Abweichungstypen und/oder die zugeordneten Simulatorvarianten durch einen Knowledge-Graphen semantisch spezifiziert werden. Insbesondere kann können durch den Knowledge-Graphen einem jeweiligen Abweichungstyp auch ein Referenzmuster, eine Ursacheninformation und/oder eine Maschinenvariante sowie ggf. deren semantische Beschreibung zugeordnet werden. Mittels derartiger Knowledge-Graphen können die genannten Zuordnungen bzw. Beschreibungen effizient und anwendungsübergreifend organisiert werden.

Nach einer weiteren vorteilhaften Ausführungsform der Erfindung kann vorzugsweise vorab eine Sensitivität eines jeweiligen Betriebszustandes auf ein jeweiliges Betriebssignal ermittelt werden. Abhängig von den ermittelten Sensitivitäten kann eine Gruppe von Betriebszuständen selektiert werden, auf die dann die Detektion der Abweichung beschränkt wird. Auf diese Weise kann in vielen Fällen die Anzahl der zu überwachenden Betriebszustände reduziert werden, ohne dass sich eine Qualität der Simulation wesentlich verringert.

Ein Ausführungsbeispiel der Erfindung wird nachfolgend anhand der Zeichnung näher erläutert. Dabei veranschaulichen jeweils in schematischer Darstellung
- Figur 1: eine Maschine mit einer erfindungsgemäßen Steuereinrichtung und
- Figur 2: die Steuereinrichtung in detaillierterer Darstellung.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

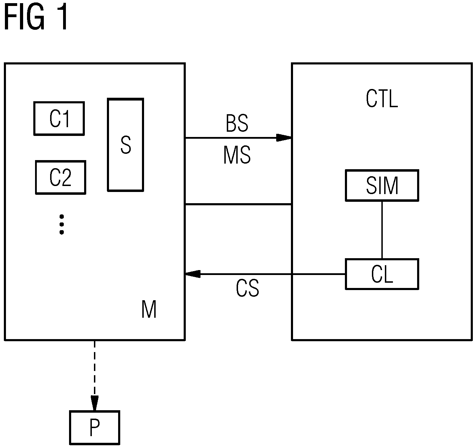

Figur 1 veranschaulicht eine Maschine M mit einer an die Maschine M gekoppelten, erfindungsgemäßen Steuereinrichtung CTL zum Überwachen und/oder Steuern der Maschine M. Die Maschine M kann insbesondere ein Roboter, ein Motor, eine Fertigungsanlage, eine Werkzeugmaschine, eine Turbine, eine Verbrennungskraftmaschine und/oder ein Kraftfahrzeug sein oder eine solche Maschine umfassen. Für das vorliegende Ausführungsbeispiel sei angenommen, dass die Maschine M eine Fertigungsanlage zur Herstellung eines Produkts P ist.

Die Maschine M weist mehrere Maschinenkomponenten C1, C2, ... auf, die bei einer Fertigungsanlage insbesondere einzelne Werkzeugmaschinen, Roboter, Förderbänder oder andere Anlagenteile, Anlagenkomponenten oder Fertigungsressourcen sein können. Aus Übersichtlichkeitsgründen sind in Figur 1 nur zwei Maschinenkomponenten C1 und C2 explizit dargestellt.

Die Steuereinrichtung CTL ist in Figur 1 extern zur Maschine M dargestellt. Alternativ dazu kann die Steuereinrichtung CTL auch ganz oder teilweise in die Maschine M integriert sein.

Die Maschine M und/oder ihre Komponenten C1, C2, ... verfügen über eine Sensorik S zum fortlaufenden Messen von aktuellen Betriebszuständen MS der Maschine M. Als Betriebszustände MS können insbesondere Sensordaten der Sensorik S oder daraus abgeleitete Zustandsdaten oder Messwerte erfasst werden, die eine Leistung, eine Drehzahl, ein Drehmoment, einen Materialfluss, eine Position von Werkstücken innerhalb einer Verarbeitungsreihenfolge, einen Bearbeitungszustand von Werkstücken, eine Bewegungsgeschwindigkeit, eine ausgeübte oder einwirkende Kraft, eine Temperatur, einen Druck, einen aktuellen Ressourcenverbrauch, vorhandene Ressourcen, einen Schadstoffausstoß, Vibrationen, einen Verschleiß und/oder eine Belastung der Maschine M oder von Komponenten der Maschine M, insbesondere im Zeitverlauf quantifizieren. Die gemessenen Betriebszustände MS werden fortlaufend von der Maschine M zur Steuereinrichtung CTL übermittelt.

Weiterhin werden durch die Steuereinrichtung CTL fortlaufend aktuelle, steuerungsrelevante Betriebssignale BS der Maschine M erfasst. Die Betriebssignale BS können auch ein oder mehrere der gemessenen Betriebszustände MS ganz oder teilweise umfassen. Darüber hinaus können die Betriebssignale BS aktuelle Stellgrößen, Stellwerte, Steuerparameter, Regelgrößen, Umgebungsdaten, Überwachungssignale, Diagnosesignale und/oder Fehlersignale der Maschine M oder von deren Komponenten C1, C2, ... umfassen. Die Betriebssignale BS werden fortlaufend von der Maschine M zur Steuereinrichtung CTL übermittelt.

Die Steuereinrichtung CTL verfügt weiter über einen nebenläufigen Simulator SIM, der im vorliegenden Ausführungsbeispiel als sogenannter digitaler Zwilling der Maschine M implementiert ist. Der nebenläufige Simulator SIM führt eine Echtzeitsimulation der Maschine M oder von einer oder mehrerer ihrer Komponenten C1, C2, ... parallel zum laufenden Betrieb der Maschine M aus.

Zu diesem Zweck werden dem nebenläufigen Simulator SIM die Betriebssignale BS zugeführt. Anhand der zugeführten Betriebssignale BS simuliert der nebenläufige Simulator SIM ein aktuelles Betriebsverhalten der Maschine M bzw. einer oder mehrerer ihrer Komponenten C1, C2, .... Aus dem simulierten Betriebsverhalten werden fortlaufend simulierte Betriebszustände der Maschine M ermittelt. Insbesondere werden auf diese Weise simulierte Betriebszustände der Maschine M ermittelt, die anderweitig nur schwer messbar oder analysierbar wären, wie z. B. drohende Engpässe im Verfahrensablauf und/oder eine Innentemperatur oder eine Kraftverteilung innerhalb von beweglichen Komponenten.

Zur Implementierung des nebenläufigen Simulators SIM stehen viele bekannte Verfahren zur physikalischen oder logistischen Simulation zur Verfügung, insbesondere Materialflussmodelle, Fertigungsablaufmodelle und/oder mechanische, elektrische oder thermische Simulationsmodelle sowie effiziente finite-Elemente-Verfahren.

Die Betriebssignale BS, die gemessenen Betriebszustände MS sowie die simulierten Betriebszustände werden zumindest teilweise in eine Steuerlogik CL der Steuereinrichtung CTL eingespeist. Anhand der eingespeisten Betriebssignale BS, der gemessenen Betriebszustände MS sowie der simulierten Betriebszustände erzeugt die Steuerlogik CL Steuersignale CS, die zum Steuern der Maschine M an diese übermittelt werden. Darüber hinaus können durch die Steuerlogik CL auch Überwachungssignale zur Überwachung der Maschine M ausgegeben werden. Als Überwachungssignal kann beispielsweise ein Alarmsignal, eine Betriebsempfehlung, ein Fehlersignal, ein Diagnosesignal und/oder ein Wartungssignal ausgegeben werden.

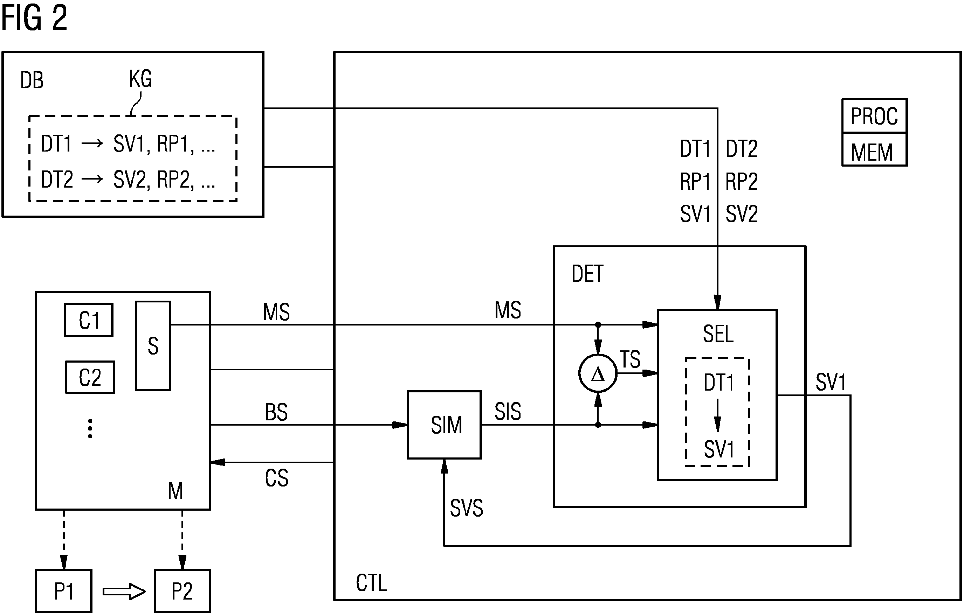

Figur 2 veranschaulicht die Steuereinrichtung CTL in detaillierterer Darstellung.

Die Steuereinrichtung CTL verfügt über einen oder mehrere Prozessoren PROC zum Ausführen der Verfahrensschritte der Erfindung sowie über einen oder mehrere Speicher MEM zum Speichern von zu verarbeitenden Daten.

Die Steuereinrichtung CTL weist, wie oben schon erwähnt, einen nebenläufigen Simulator SIM auf, dem im laufenden Betrieb der Maschine M fortlaufend aktuelle Betriebssignale BS der Maschine M zugeführt werden. Anhand der übermittelten Betriebssignale BS simuliert der nebenläufige Simulator SIM in Echtzeit ein aktuelles Betriebsverhalten der Maschine M oder von mindestens einer Maschinenkomponente. Auf diese Weise ermittelt der nebenläufige Simulator SIM parallel zum laufenden Betrieb der Maschine M fortlaufend einen oder mehrere aktuelle simulierte Betriebszustände SIS der Maschine M.

Weiterhin erfasst die Steuereinrichtung CTL im laufenden Betrieb, wie oben beschrieben, aktuelle gemessene Betriebszustände MS der Maschine M in Form von Sensordaten der Sensorik S oder in Form von daraus abgeleiteten Daten. Die gemessenen Betriebszustände MS können durch die Steuereinrichtung CTL gegebenenfalls vorverarbeitet, transformiert oder über die Zeit gefiltert werden, um z. B. Ausreißer in den Messwerten zu erkennen und gegebenenfalls gesondert zu behandeln.

Die durch den nebenläufigen Simulator SIM ermittelten simulierten Betriebszustände SIS sollen insbesondere auch Betriebsgrößen umfassen, die in den gemessenen Betriebszuständen MS enthalten sind. Als simulierte Betriebszustände SIS können so z. B. eine Leistung, eine Drehzahl, ein Drehmoment, ein Materialfluss, eine Position von Werkstücken innerhalb einer Verarbeitungsreihenfolge, einen Bearbeitungszustand von Werkstücken, eine Bewegungsgeschwindigkeit, eine ausgeübte oder einwirkende Kraft, eine Temperatur, ein Druck, vorhandene Ressourcen, ein Ressourcenverbrauch, ein Schadstoffausstoß, Vibrationen, ein Verschleiß und/oder eine Belastung der Maschine M oder ihrer Maschinenkomponenten insbesondere im Zeitverlauf durch den nebenläufigen Simulator SIM ermittelt werden.

Die simulierten Betriebszustände SIS und die gemessenen und ggf. transformierten Betriebszustände MS werden in einen Abweichungsdetektor DET der Steuereinrichtung CTL eingespeist. Der Abweichungsdetektor DET vergleicht fortlaufend die simulierten Betriebszustände SIS mit den gemessenen Betriebszuständen MS und prüft, ob und/oder inwieweit ein jeweiliger simulierter Betriebszustand SIS von einem korrespondierenden gemessenen Betriebszustand MS abweicht.

Die zu vergleichenden Betriebszustände SIS und MS können vorzugsweise vorab mittels einer Sensitivitätsanalyse selektiert werden. Hierbei wird ermittelt, welche Betriebszustände sich stärker auf ein Betriebsverhalten der Maschine M auswirken und welche schwächer. Auf diese Weise kann eine Gruppe von Betriebszuständen selektiert werden, die sich besonders stark, deterministisch oder charakteristisch auf das Betriebsverhalten auswirken. Der vorstehend beschriebene Vergleich im Abweichungsdetektor DET kann dann auf die Gruppe von selektierten Betriebszuständen beschränkt werden. Zur Durchführung einer solchen Sensitivitätsanalyse steht eine Vielzahl von bekannten numerischen Verfahren zur Verfügung.

Als Vergleichsergebnis ermittelt der Abweichungsdetektor DET eine numerische Abweichung zwischen den simulierten Betriebszuständen SIS und den gemessenen Betriebszuständen MS. Eine jeweilige Abweichung kann hier beispielsweise in Form eines oder mehrerer gegebenenfalls gewichteter euklidischer Abstände von Vektordarstellungen der simulierten Betriebszustände SIS zu Vektordarstellungen der gemessenen Betriebszustände MS ermittelt werden.

Bei Detektion einer Abweichung wird durch den Abweichungsdetektor DET ein Triggersignal TS generiert. Das Triggersignal TS kann insbesondere dann generiert werden, wenn ein ermittelter Abstand einen vorgegebenen Schwellwert überschreitet.

Durch das Triggersignal TS wird eine Selektionseinrichtung SEL des Abweichungsdetektors DET dazu veranlasst, ein Abweichungsmuster zu ermitteln und dieses mit mehreren vorgegebenen Abweichungstypen zu vergleichen. Das Abweichungsmuster quantifiziert und charakterisiert hierbei die Abweichung zwischen den simulierten Betriebszuständen SIS und den gemessenen Betriebszuständen MS und/oder eine Änderung der gemessenen Betriebszustände MS, insbesondere im Zeitverlauf. Ein jeweiliges Änderungsmuster kann dabei z. B. eine oder mehrere Zeitreihen von Änderungen der gemessenen Betriebszustände MS und/oder eine oder mehrere Zeitreihen von Abweichungen zu den simulierten Betriebszuständen SIS umfassen.

Erfindungsgemäß soll versucht werden das ermittelte Abweichungsmuster einem vorgegebenen Abweichungstyp DT1 bzw. DT2 zuzuordnen, der jeweils für eine Modifikation der Maschine M oder für eine Modifikation des Betriebs der Maschine M charakteristisch ist.

Die vorgegebenen Abweichungstypen DT1 und DT2 sind in einer an die Steuereinrichtung CTL gekoppelten Datenbank DB in einem Knowledge-Graphen KG gespeichert. Im Knowledge-Graphen KG sind einem jeweiligen Abweichungstyp DT1 bzw. DT2 eine abweichungstypspezifische Simulatorvariante SV1 bzw. SV2, mindestens ein abweichungstypspezifisches Referenzmuster RP1 bzw. RP2 sowie eine Ursacheninformation über eine abweichungsverursachende Maschinenkomponente zugeordnet. Darüber hinaus enthält der Knowledge-Graph KG eine semantische Beschreibung der Abweichungstypen DT1 und DT2, der Simulatorvarianten SV1 und SV2, der Referenzmuster RP1 und RP2 und/oder der jeweils zugeordneten Ursacheninformation.

Aus Übersichtlichkeitsgründen sind in Figur 2 nur zwei Abweichungstypen DT1 und DT2 explizit dargestellt. Insofern eine Vielzahl von Modifikationen der Maschine M oder des Maschinenbetriebs vorgesehen sein können, kann eine Vielzahl weiterer modifikationsspezifischer Abweichungstypen im Knowledge-Graph KG gespeichert sein.

Als Referenzmuster RP1 und RP2 sind spezielle Abweichungsmuster im Knowledge-Graphen KG hinterlegt, die für einen jeweiligen Abweichungstyp DT1 bzw. DT2 und mithin für eine spezielle Modifikation der Maschine M oder des Maschinenbetriebs charakteristisch sind. Derartige Referenzmuster können beispielsweise aus historischen Betriebsdaten der Maschine M oder von dazu ähnlichen Maschinen ermittelt werden. Vorzugsweise können auch die im laufenden Betrieb der Maschine M ermittelte Abweichungsmuster nach Zuordnung zu einem einschlägigen Abweichungstyp diesem Abweichungstyp im Knowledge-Graphen KG als weiteres Referenzmuster zugeordnet werden.

Insbesondere können im Knowledge-Graphen KG Referenzmuster hinterlegt werden, die für einen Austausch von Maschinenkomponenten, für strukturelle topologische und/oder funktionelle Modifikationen der Maschine M, für eine Produktänderung bei einer Fertigungsanlage, für eine Änderung eines Benutzerverhaltens oder eines Arbeitsplanes, für Wartungsarbeiten und/oder für eine Veränderung einer Konfiguration der Maschine M charakteristisch sind.

Entsprechend können als abweichungstypspezifische Simulatorvarianten SV1 und SV2 jeweils eine Simulatorkomponente, eine Parametrisierung und/oder eine Konfiguration für den nebenläufigen Simulator SIM im Knowledge-Graphen KG hinterlegt sein, die für eine Simulation der modifizierten Maschine M oder des modifizierten Maschinenbetriebs relevant sind. So kann ein Austausch einer ersten Maschinenkomponente gegen eine zweite Maschinenkomponente durch Austausch einer für die Simulation der ersten Maschinenkomponente zuständigen, ersten Simulatorkomponente gegen eine für die Simulation der zweiten Maschinenkomponente zuständigen, zweiten Simulatorkomponente im nebenläufigen Simulator SIM nachgebildet werden.

Für das vorliegende Ausführungsbeispiel sei angenommen, dass die Modifikation der Fertigungsanlage M und ihres Betriebs eine Umstellung der Fertigungsanlage M von einer Herstellung einer ersten Version P1 eines Produkts zur Herstellung einer zweiten Version P2 des Produkts umfasst. Charakteristisch für eine derartige Modifikation können beispielsweise Änderungen von Bearbeitungstrajektorien, ein Wechsel von Bearbeitungswerkzeugen, ein Wechsel von Werkstoffen, veränderte Kräfte oder andere strukturelle, topologische oder verfahrenstechnische Veränderungen sein.

Vorzugsweise können derartige charakteristische Änderungen bei früheren Produktwechseln der Fertigungsanlage M oder einer dazu ähnlichen Maschine aufgezeichnet und im Knowledge-Graphen KG in Zuordnung zu einem für den Produktwechsel charakteristischen Abweichungstyp hinterlegt werden.

Für das vorliegende Ausführungsbeispiel sei angenommen, dass der Abweichungstyp DT1 für den genannten Produktwechsel charakteristisch ist. Entsprechend sind dem Abweichungstyp DT1 im Knowledge-Graphen KG ein für die Produktänderung charakteristisches Referenzmuster RP1, eine den Produktwechsel spezifizierende Ursacheninformation sowie eine zur Simulation des Produktwechsels oder zur Herstellung der Produktversion P2 qualifizierte Simulatorvariante SV1 zugeordnet. Zur Simulation derartiger Produktwechsel steht bereits heute eine Vielzahl geeigneter Simulationsverfahren zur Verfügung.

Zur Zuordnung bzw. Selektion eines für das ermittelte Abweichungsmuster einschlägigen Abweichungstyps werden der Selektionseinrichtung SEL der Abweichungstyp DT1 mit dem zugeordneten Referenzmuster RP1 und der zugeordneten Simulatorvariante SV1 sowie der Abweichungstyp DT2 mit zugeordnetem Referenzmuster RP2 und zugeordneter Simulatorvariante SV2 zugeführt.

Darüber hinaus werden in die Selektionseinrichtung SEL die simulierten Betriebszustände SIS, die gemessenen Betriebszustände MS sowie das Triggersignal TS eingespeist. Wie oben bereits erwähnt, wird die Selektionseinrichtung SEL durch das Triggersignal TS dazu veranlasst, anhand der gemessenen Betriebszustände MS und der simulierten Betriebszustände SIS ein Abweichungsmuster zu ermitteln und letzteres mit allen Abweichungstypen, hier DT1 und DT2 zu vergleichen.

Der Vergleich wird im vorliegenden Ausführungsbeispiel ausgeführt, indem das Abweichungsmuster mit den Referenzmustern RP1 und RP2 verglichen wird, wobei jeweils ein Ähnlichkeitsmaß ermittelt wird. Zur Berechnung eines solchen Ähnlichkeitsmaßes können unterschiedliche Ähnlichkeitsmetriken, wie z. B. eine Jaccard-Ähnlichkeitsmetrik, eine Braun-Ähnlichkeitsmetrik und/oder eine Phi-Ähnlichkeitsmetrik verwendet werden. Insbesondere kann als Ähnlichkeitsmaß ein euklidischer Abstand von darstellenden Vektoren der zu vergleichenden Größen ermittelt werden.

Als Ergebnis des Vergleichs wird dasjenige Referenzmuster, hier RP1, selektiert, das dem ermittelten Abweichungsmuster am ähnlichsten ist; also z. B. dasjenige Referenzmuster, das den geringsten euklidischen Abstand zum Abweichungsmuster aufweist. Anhand des ähnlichsten Referenzmusters RP1 wird der zugeordnete Abweichungstyp, hier DT1, als für das ermittelte Abweichungsmuster einschlägiger Abweichungstyp selektiert. Anhand des selektierten Abweichungstyps DT1 wird weiterhin die dem selektierten Abweichungstyp DT1 im Knowledge-Graphen KG zugeordnete Simulatorvariante SV1 als einschlägige Simulatorvariante selektiert.

Die selektierte Simulatorvariante SV1 wird von der Selektionseinrichtung SEL zum nebenläufigen Simulator SIM übermittelt, um diesen an den Produktwechsel oder an die neue Produktversion P2 zu adaptieren.

Die Adaption des nebenläufigen Simulators SIM kann beispielsweise dadurch erfolgen, dass Parameter oder Modellkomponenten der selektierten Simulatorvariante SV1 in den nebenläufigen Simulator SIM eingefügt werden oder Parameter oder Modellkomponenten des nebenläufigen Simulators SIM modifizieren oder ersetzen.

Wie oben bereits erwähnt, wird der adaptierte Simulator SIM im laufenden Betrieb der Maschine M weiter dazu genutzt, die Maschine M in Echtzeit zu überwachen oder durch Steuersignale CS zu steuern. Auf die erfindungsgemäße Weise können Änderungen der Maschine M oder des Maschinenbetriebs automatisch erkannt werden und eine automatische Adaption des nebenläufigen Simulators SIM veranlassen. Es ist insbesondere nicht erforderlich, dass der nebenläufige Simulator SIM vorab alle möglichen Änderungen der Maschine M oder des Maschinenbetriebs abbildet. Stattdessen wird gewissermaßen auf eine Bibliothek von Änderungsphänomenen, hier in Form des Knowledge-Graphen KG, mit zugeordneten änderungsspezifischen Simulatorvarianten zugegriffen und der nebenläufige Simulator SIM änderungstypspezifisch adaptiert. Auf diese Weise kann die Erfassung von Änderungen gewissermaßen von der Simulation selbst entkoppelt werden. Bei vielen Änderungsphänomenen ist somit kein manueller Eingriff in die Simulation des laufenden Betriebs der Maschine M mehr erforderlich.

## Patentansprüche

1. Computerimplementiertes Verfahren zum Überwachen oder Steuern einer Maschine (M), wobei im laufenden Betrieb der Maschine (M)
a) fortlaufend aktuelle Betriebssignale (BS) der Maschine (M) erfasst und ein aktueller Betriebszustand (MS) der Maschine (M) gemessen werden,
b) durch einen nebenläufigen Simulator (SIM) anhand der erfassten Betriebssignale (BS) fortlaufend ein simulierter Betriebszustand (SIS) der Maschine (M) ermittelt wird,
c) infolge einer Detektion einer Abweichung zwischen dem simulierten Betriebszustand (SIS) und dem gemessenen Betriebszustand (MS) ein die Abweichung oder eine Änderung des gemessenen Betriebszustands (MS) quantifizierendes Abweichungsmuster mit mehreren vorgegebenen, für eine Modifikation der Maschine (M) oder eines Maschinenbetriebs charakteristischen Abweichungstypen (DT1, DT2) verglichen wird, denen jeweils eine abweichungstypspezifische Simulatorvariante (SV1, SV2) zugeordnet ist,
d) abhängig vom Vergleichsergebnis einer der Abweichungstypen (DT1, DT2) selektiert wird,
e) der nebenläufige Simulator (SIM) anhand der dem selektierten Abweichungstyp (DT1) zugeordneten Simulatorvariante (SV1) adaptiert wird, und
f) die Maschine (M) mittels des adaptierten nebenläufigen Simulators (SIM) überwacht oder gesteuert wird.

2. Verfahren nach einem der vorhergehenden Ansprüche, **dadurch gekennzeichnet,**
**dass** den vorgegebenen Abweichungstypen (DT1, DT2) jeweils ein oder mehrere Referenzmuster (RP1, RP2) zugeordnet sind,
**dass** ein jeweils ermitteltes Abweichungsmuster mit den Referenzmustern (RP1, RP2) verglichen wird, wobei jeweils ein Ähnlichkeitsmaß ermittelt wird, und
**dass** die Selektion des Abweichungstyps (DT1, DT2) abhängig von den ermittelten Ähnlichkeitsmaßen erfolgt.

3. Verfahren nach Anspruch 2, **dadurch gekennzeichnet,**
**dass** einem jeweils vorgegebenen Abweichungstyp (DT1, DT2) ein oder mehrere Referenzmuster (RP1, RP2) zugeordnet sind, die
- für einen Austausch von Maschinenkomponenten (C1, C2),
- für strukturelle, topologische und/oder funktionelle Modifikationen der Maschine (M),
- für eine Produktänderung bei einer Fertigungsanlage (M),
- für eine Änderung eines Benutzerverhaltens oder eines Arbeitsplanes,
- für Wartungsarbeiten und/oder
- für eine Änderung einer Konfiguration der Maschine (M) charakteristisch sind.

4. Verfahren nach einem der vorhergehenden Ansprüche, **dadurch gekennzeichnet,**
**dass** zum Vergleich des ermittelten Abweichungsmusters mit einem jeweiligen Abweichungstyp (DT1, DT2)
- mittels der dem jeweiligen Abweichungstyp (DT1, DT2) zugeordneten Simulatorvariante (SV1, SV2) ein weiterer simulierter Betriebszustand ermittelt wird,
- der weitere simulierte Betriebszustand mit dem gemessenen Betriebszustand (MS) verglichen wird, und
- die Selektion des Abweichungstyps (DT1, DT2) abhängig vom Vergleichsergebnis erfolgt.

5. Verfahren nach einem der vorhergehenden Ansprüche, **dadurch gekennzeichnet,**
**dass** die ermittelten Abweichungsmuster in einer Datenbank (DB) hinterlegt werden, und
**dass** die hinterlegten Abweichungsmuster bei einer nachfolgenden Selektion des Abweichungstyps (DT1, DT2) berücksichtigt werden.

6. Verfahren nach einem der vorhergehenden Ansprüche, **dadurch gekennzeichnet,**
**dass** einem jeweils vorgegebenen Abweichungstyp (DT1, DT2) eine Ursacheninformation über eine abweichungsverursachende Maschinenkomponente (C1, C2) zugeordnet ist, und
**dass** der nebenläufige Simulator (SIM) abhängig von der dem selektierten Abweichungstyp (DT1) zugeordneten Ursacheninformation maschinenkomponentenspezifisch adaptiert wird.

7. Verfahren nach einem der vorhergehenden Ansprüche, **dadurch gekennzeichnet,**
**dass** einem jeweils vorgegebenen Abweichungstyp (DT1, DT2) eine Variante der Maschine zugeordnet ist, und
**dass** der nebenläufige Simulator (SIM) abhängig von der dem selektierten Abweichungstyp (DT1) zugeordneten Variante der Maschine maschinenvariantenspezifisch adaptiert wird.

8. Verfahren nach einem der vorhergehenden Ansprüche, **dadurch gekennzeichnet,**
**dass** die Abweichungstypen (DT1, DT2) und/oder die zugeordneten Simulatorvarianten (SV1, SV2) durch einen Knowledge-Graphen (KG) semantisch spezifiziert werden.

9. Verfahren nach einem der vorhergehenden Ansprüche, **dadurch gekennzeichnet,**
**dass** eine Sensitivität eines jeweiligen Betriebszustandes auf ein jeweiliges Betriebssignal (BS) ermittelt wird,
**dass** abhängig von den ermittelten Sensitivitäten eine Gruppe von Betriebszuständen selektiert wird, und
**dass** die Detektion der Abweichung auf die Gruppe der selektierten Betriebszustände beschränkt wird.

10. Anordnung (CTL) zum Überwachen oder Steuern einer Maschine (M), eingerichtet zum Ausführen eines Verfahrens nach einem der vorhergehenden Ansprüche.

11. Computerprogrammprodukt eingerichtet zum Ausführen eines Verfahrens nach einem der Ansprüche 1 bis 9.

12. Computerlesbares Speichermedium mit einem Computerprogrammprodukt nach Anspruch 11.
